# EUROPEAN PATENT SPECIFICATION

(11) **EP 0 947 296 B1**
(45) Date of publication and mention of the grant of the patent: **10.09.2003**
(21) Application number: 99302562.6
(22) Date of filing: 31.03.1999
(51) Int. Cl.: B25J 19/00

(54) **Spring balancer apparatus**
Federausgleichsvorrichtung
Dispositif d'équilibrage par ressort

(30) Priority: 31.03.1998 JP 10179198
(43) Date of publication of application: 06.10.1999
(73) Proprietor: FANUC LTD., Minamitsuru-gun, Yamanashi 401-05 (JP)
(72) Inventor: Okada, Takeshi, 10-306 Fanuc Manshonharimoni, Yamanashi 401-0511 (JP); Uchida, Hiroshi, 14-503 Fanuc Manshonharimoni, Yamanashi 401-0511 (JP); Uemura, Norimitsu, Fanuc Dai3virakaramatsu, Yamanashi 401-0511 (JP)
(74) Representative: Billington, Lawrence Emlyn

(56) References cited:
- US-A- 4 592 697
- PATENT ABSTRACTS OF JAPAN vol. 015, no. 203 (M-1116), 24 May 1991 (1991-05-24) & JP 03 055192 A (TOKICO LTD), 8 March 1991 (1991-03-08)
- PATENT ABSTRACTS OF JAPAN vol. 016, no. 299 (M-1274), 2 July 1992 (1992-07-02) & JP 04 082692 A (TOKICO LTD), 16 March 1992 (1992-03-16)

## Description

The present invention relates to an improvement of a spring balancer apparatus.

Conventionally, there is a spring balancer apparatus that counterbalances fluctuations in gravitational load that are caused by the change of attitude of movable parts of a machine such as a robot.

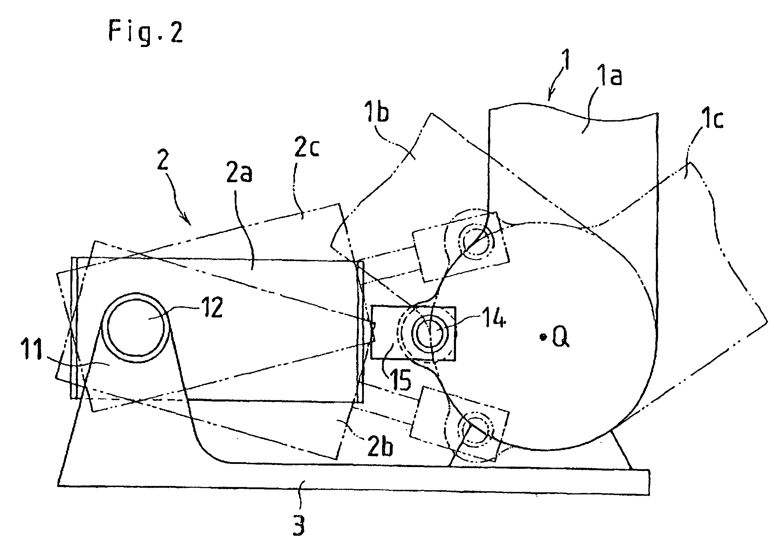

FIG. 2 shows an example of the case where a spring balancer apparatus is located between a base and an arm of a robot.

FIG. 2 is a side view showing the principal part of a robot arm 1 and an outline of a spring balancer apparatus 2. The robot arm 1, which is rockably mounted on a base 3, can be rocked within a vertical plane by means of a servomotor or the like for use as a drive source. When the robot arm 1 is in its upright position (attitude la), a load that is applied along the central axis of the robot arm 1 only acts in the radial direction with respect to a pivotal point Q between the robot arm 1 and the base 3, and no moment acts around the point Q.

When the robot arm 1 rocks counterclockwise to assume an attitude 1b, on the other hand, a left-handed moment acts around the point Q. When the arm 1 rocks clockwise to take an attitude 1c, right-handed moment acts around the point Q. To keep the robot arm 1 stationary, resisting these moments, a substantial load acts on the servomotor or the like, thus entailing a waste of electric power.

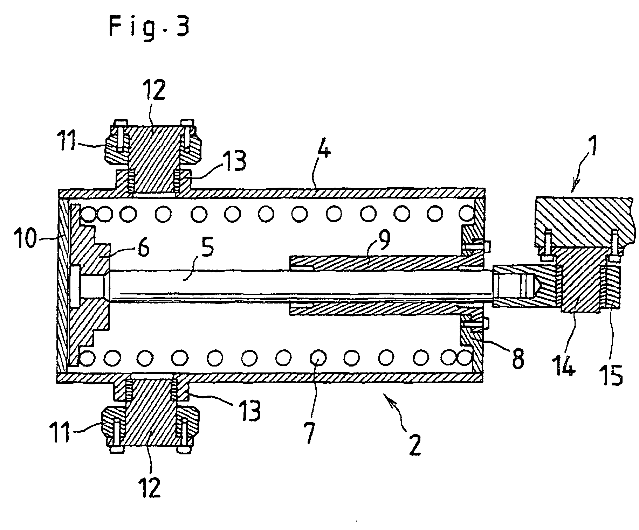

The spring balancer apparatus 2 is provided in order to counterbalance or reduce fluctuations in gravitational load that are caused by the change of the attitude. As shown in FIG. 3, the conventional spring balancer apparatus 2 generally comprises a pipe 4, first wall plate 8, second wall plate 10, rod 5, retaining plate 6, and spring 7.

The first wall plate 8, which has a through-hole in its central portion, is fixed to one end of the pipe 4. The rod 5 penetrates the through-hole of the plate 8, and the retaining plate 6 is attached to the distal end of the rod 5. A compressed spring 7 is interposed between the retaining plate 6 and the first wall plate 8, whereby the rod 5 is continually urged to plunge into the pipe 4. A bush housing 9 is an auxiliary member for maintaining the linear motion of the rod 5. The bush housing 9, which is fixed to the first wall plate 8 by means of bolts or the like, guides the rod 5 in linear motion.

A sleeve 13 is provided integrally on each side of the outer peripheral portion of the pipe 4. A pin 12 of a staple 11 that is set up on the base 3 is fitted in each sleeve 13. As shown in FIG. 3, the pipe 4 is rockably mounted on the staples 11 by means of the sleeves 13 and the pins 12.

A crevice 15 is provided integrally on one end of the rod 5 that is remoter from the retaining plate 6. A pin 14, which is fixed to the lower end portion of the robot arm 1, is fitted in a through-hole in the crevice 15. With this arrangement, the rod 5 is rockable around the pin 14 at the lower end of the arm 1, as shown in FIG. 2.

Thus, when the robot arm 1 rocks in the counterclockwise direction (attitude 1b of FIG. 2), the attitude of the spring balancer apparatus 2 is changed into a state 2b such that the spring 7 is compressed. Thereupon, the crevice 15 pulls the pin 14 to give a clockwise moment to the arm 1. In consequence, a counterclockwise moment attributable to the gravitational load that is produced by the attitude change of the robot arm 1 is canceled.

When the robot arm 1 rocks in the clockwise direction (attitude 1c), on the other hand, the attitude of the spring balancer apparatus 2 is changed into a state 2c such that the spring 7 is compressed. Thereupon, the crevice 15 pulls the pin 14 to give a counterclockwise moment to the arm 1. In consequence, a clockwise moment attributable to the gravitational load that is produced by the attitude change of the robot arm 1 is canceled.

If the weight of the robot arm 1 is increased, the spring 7 used should naturally have a proportionally higher elastic modulus.

Conventionally, the elastic modulus is enhanced by increasing the coil diameter of the spring 7. If the coil diameter of the spring 7 is increased, however, the distance between each two adjacent spiral turns is reduced. In consequence, satisfactory extension and contraction strokes cannot be obtained unless the overall length of the spring 7 is generous. Inevitably, therefore, the whole structure of the spring balancer apparatus 2 itself is large-sized.

The object of the present invention is to provide a small-sized, high-power spring balancer apparatus, whereby the aforementioned drawbacks of the prior art can be eliminated or reduced, and the spring balancer apparatus can be conveniently disassembled.

JP 03 055192 A has proposed providing a plurality of coil springs arranged one in another along a spring balancer according to the preamble of attached claim 1, while US-A-4,592,697 has proposed making the retaining plate detachable.

According to the present invention there is provided a spring balancer apparatus to be installed between a base and a movable part of a machine or between movable parts of a machine, comprising: a rod of which one end is to be mounted on the base or the movable part of the machine; a retaining plate within a housing of the apparatus attached to the other end of the rod; and two or more springs with different turn diameters, arranged one inside another around the rod and between the retaining plate and a member which forms a wall of the housing , which member is at the opposite side of the housing from the side at which is located the retaining plate; characterised in that said retaining plate is detachably attached to the end of the rod and is formed, in the center thereof, with a recess which opens toward a member which forms a wall of the apparatus housing on the side thereof adjacent the retaining plate, one end of the rod projects into the recess, and a threaded portion formed on the projecting end of the rod is engaged with a nut so that the retaining plate is mounted on the rod, and further, the member which forms the wall of the apparatus housing on the side thereof adjacent the retaining plate is formed with a through-hole in the center thereof so that the nut can be operated through the through-hole from outside the apparatus housing.

A required elastic modulus can be obtained without increasing spring coil diameter, so that the overall size of the spring balancer apparatus can be made smaller than in the case where the elastic modulus is enhanced by means of a single spring.

Further, the retaining plate and/or the wall plate may be formed with a circumferential groove or protrusion, which can internally or externally touch one end of each spring, thereby fixing the center position of each spring. By doing this, the adjacent springs are prevented from being dislocated and interfering with one another. Since the adjacent springs can be located close to one another, the whole structure can be reduced in size.

Moreover, the springs may be arranged in a manner such that the adjacent springs, inner and outer, are turned in opposite directions and that the direction of buckling caused as they are compressed is in line with the diametrical direction thereof. Thus, the adjacent springs can be arranged close to each other without the possibility of getting intertwined or interfering with each other so that the whole structure is further reduced in size.

Furthermore, the housing may be composed of a pipe and wall plates at the opposite ends of the pipe, the wall plates being with fastened by means of tie rods to form a constructible integral unit with the retaining plate and the rod being connected so as to be able to be disassembled. Moreover a housing for bushes for guiding the rod may be removably attached to a through hole in the housing on the side remote from the retaining plate. Thus, expendables and the springs can be easily replaced with new ones.

The foregoing and other features of embodiments of the invention will become apparent from the following description of preferred embodiments of the invention with respect to the accompanying drawings, in which:
FIG. 1 is a sectional view showing a spring balancer apparatus according to one embodiment of the invention;
FIG. 2 is a side view showing the principal part of a robot arm and an outline of the spring balancer apparatus, which are common to the one embodiment of the invention and the prior art; and
FIG. 3 is a sectional view showing a conventional spring balancer apparatus.

### DETAILED DESCRIPTION OF THE PREFERRED EMBODIMENTS

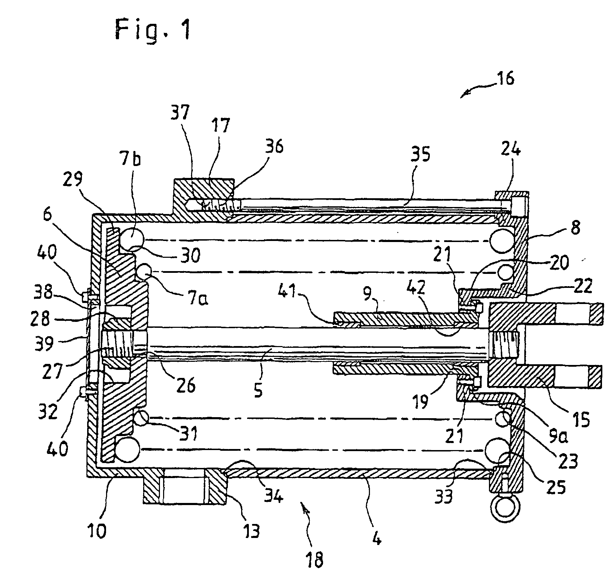

FIG. 1 is a sectional view showing a spring balancer apparatus 16 according to one embodiment of the present invention, which is divided by two planes that intersect each other at an angle of 135° on the central axis of a rod 5.

As in the conventional example shown in FIG. 3, two sleeves 13, each of which is fitted on a pin 12 of its corresponding staple 11 on a base 3, are opposed to each other at a pitch of 180° in the circumferential direction of a pipe 4. Four fastening protrusions 17 are arranged circumferentially at angular intervals of 90° or at distances of 45° , 135° , 225° , and 315° from the position of one of the sleeves 13.

The spring balancer apparatus 16 comprises a body (housing) 18, which is composed of a pipe 4, first wall plate 8, and second wall plate 10. The apparatus 16 further comprises a rod 5, retaining plate 6, springs 7a and 7b with different turn diameters, and bush housing 9, which are mounted in the body 18. Bushes 41 and 42 are fitted in the bush housing 9.

A peripheral wall 20 integrally protrudes inward from the central portion of the first wall plate 8. One end portion of the bush housing 9 is fitted in a through-hole that is composed of a reduced-diameter portion 19 at the distal end of the peripheral wall 20. A flange portion 9a of the bush housing 9 is attached to the peripheral wall 20 by means of bolts 21. Thus, the housing 9 is mounted on the first wall plate 8 by means of the bolts 21.

The outer peripheral surface of a thick-walled portion 22, formed on the basal part of the peripheral wall 20, forms a circumferential protrusion 23. The protrusion 23 touches the inside of the small-diameter spring 7a that is interposed between the retaining plate 6 and the first wall plate 8, thereby preventing dislocation of the spring 7a. Further, the inner peripheral surface of a peripheral wall 24 that is formed protruding inward from the outer peripheral portion of the wall plate 8 forms an inner peripheral groove 25. The groove 25 touches the outside of the large-diameter spring 7b that is interposed between the retaining plate 6 and the first wall plate 8, thereby preventing dislocation of the spring 7b.

On the other hand, a hole 26 through which the distal end of the rod 5 passes bored through the central portion of the retaining plate 6 that holds the respective other ends of the large- and small-diameter springs 7a and 7b. The constricted distal end portion of the rod 5 is inserted into the hole 26 and a nut is screwed on the external thread portion 27 formed on the constricted distal end portion so that the constricted distal end portion of the rod 5 is fixed to the retaining plate 6.

A large-diameter portion 29, medium-diameter portion 30, and small-diameter portion 31 are formed on the outer peripheral portion of the retaining plate 6 by cutting using a lathe or the like. One end of the small-diameter spring 7a is supported on the inner end face of the medium-diameter portion 30, while one end of the large-diameter spring 7b is supported on the inner end face of the large-diameter portion 29.

The diameter of a circumferential protrusion that is constituted by the small-diameter portion 31 of the retaining plate 6 is equal to that of the circumferential protrusion 23 of the first wall plate 8. The diameter of a circumferential protrusion that is constituted by the medium-diameter portion 30 is substantially equal to the inside diameter of the large-diameter spring 7b. Thus, the small-diameter portion 31 of the retaining plate 6 is a structure that touches the inside of the small-diameter spring 7a, thereby preventing dislocation of the spring 7a. The medium-diameter portion 30 is a structure that touches the inside of the large-diameter spring 7b, thereby preventing dislocation of the spring 7b.

The small-diameter spring 7a and the large-diameter spring 7b are turned in opposite directions. If the spring 7a is a right-handed spiral, for example, the spring 7b is a left-handed spiral. If the spring 7a is left-handed, the spring 7b is right-handed.

Prior to mounting of the small- and large-diameter springs 7a and 7b, the direction of buckling for each spring that is caused as they are compressed is measured in advance. Then the springs 7a and To are mounted so that the direction of their warping that is caused as they are contracted is in line with their diametrical direction. Thus, the springs 7a and 7b are prevented from touching each other due to buckling that is attributable to their compression.

A blind hole 32 in the back surface of the retaining plate 6 is a spot-facing hole in which the nut 28 can be embedded.

One end of the pipe 4 is positioned by being fitted into a fitting groove 33 that is formed on the peripheral wall 24 of the first wall plate 8, while the other end of the pipe 4 is positioned by being fitted into a fitting groove 34 that is formed on the end face of a cylindrical portion of the second wall plate 10. Four tie rods 35 or four bolts individually penetrate through-holes that are formed in the peripheral wall 24 of the first wall plate 8. Then, an external screw 36 on the distal end of each tie rod 35 or bolt is screwed into an internal screw 37 of each corresponding one of the four fastening protrusions 17 on the outer peripheral surface of the pipe 4, so that the first wall plate 8, pipe 4, and second wall plate 10 are fastened integrally to one another.

A hole 38 in the central portion of the second wall plate 10 is designed to adjust the threaded engagement between the rod 5 and the nut 28, thereby adjusting the gap between the retaining plate 6 and the second wall plate 10. The hole 38 is just large enough to receive a box wrench or the like for the nut 28. Further, a cover member 39 for closing the hole 38 is fixed to the back surface of the second wall plate 10 by means of bolts 40.

In the present embodiment, the elastic modulus of the entire spring means is enhanced by doubly arranging the two springs 7a and 7b, inner and outer, with different diameters. Unlike a single-spring arrangement, this spring arrangement does not require the coil diameter of each spring to be increased. Even in the case of the spring balancer apparatus 16 that requires high power, therefore, it is not necessary to increase the overall length of the spring in proportion to the increase of the spring coil diameter so as to extend stroke for extension and contraction. Thus, the overall length of the spring balancer apparatus 16 can be made shorter than that of the conventional spring balancer apparatus 2 that uses the single spring.

According to the present embodiment in which the two or more springs 7a and 7b are arranged inside and outside, instead of increasing the coil diameter or overall length of each spring, dislocation of the respective center positions of the springs 7a and 7b are prevented by means of the circumferential protrusion 23 of the first wall plate 8, small-diameter portion 31 of the retaining plate 6, peripheral groove 25 of the wall plate 8, and medium-diameter portion 30 of the retaining plate 6. Accordingly, the two springs 7a and 7b can be arranged close to each other without interference attributable to dislocation, although they are frequently extended and contracted. Thus, a plurality of springs can be arranged overlapping one another without increasing the diameter of the spring balancer apparatus 16.

In mounting the small- and large-diameter springs 7a and 7b, moreover, they are made coincident in buckling directivity. If the springs 7a and To are compressed and warped, therefore, the possibility of their interfering with each other is low. Even if any interference is caused, the springs 7a and 7b never get intertwined when they are compressed, since they are turned in opposite directions.

The bush housing 9 is mounted on the wall plate 8 by means of the bolts 21, while the rod 5 is attached to the retaining plate 6 by means of the nut 28. If the inner peripheral surfaces of the bushes 41 and 42 and the outer peripheral surface of the rod 5 are worn out, therefore, these members can be easily replaced with new ones. Since the wall plate 8, pipe 4, and wall plate 10 can be easily disassembled by only removing the tie rods 35, moreover, replacement of the worn springs 7a and 7b is easy.

In the spring balancer apparatus according to the present invention, as described above, the elastic modulus of the entire spring means is enhanced by arranging two or more springs with different diameters overlapping each other. Unlike a single-spring arrangement, this spring arrangement does not require the coil diameter or overall length of each spring to be increased. Thus, there may be provided a small-sized, high-power spring balancer apparatus.

Further, the spring balancer apparatus is assembled with use of the circumferential groove and protrusion for fixing the spring center position in a manner such that the adjacent springs, inner and outer, can buckle in the same direction. Thus, no extra space is needed between the springs, so that the diameter of the spring balancer can be reduced. Since the adjacent springs are turned in opposite directions, moreover, interwinement of springs which would prevent contraction does not occur even if they touch each other.

Furthermore, the two wall plates that constitute the body and the pipe are formed independently of one another, and the retaining plate, rod, and bush housing can be disassembled with ease. Thus, expendables can be easily replaced with new ones.

## Claims

1. A spring balancer apparatus to be installed between a base and a movable part of a machine or between movable parts of a machine, said apparatus comprising:
a rod (5) of which one end is to be mounted on the base or the movable part of the machine;
a retaining plate (6) within a housing of the apparatus attached to the other end of the rod (5); and
two or more springs (7a, 7b) with different turn diameters, arranged one inside another around the rod (5) and between the retaining plate (6) and a member (8) which forms a wall of the housing (18) , which member (8) is at the opposite side of the housing (18) from the side at which is located the retaining plate (6);
**characterised in that** said retaining plate (6) is detachably attached to the end of the rod (5) and is formed, in the center thereof, with a recess (32) which opens toward a member (10) which forms a wall of the apparatus housing (18) on the side thereof adjacent the retaining plate (6), one end of the rod (5) projects into the recess (32), and a threaded portion (27) formed on the projecting end of the rod (5) is engaged with a nut (28) so that the retaining plate (6) is mounted on the rod (5), and further,
the member (10) which forms the wall of the apparatus housing (18) on the side thereof adjacent the retaining plate (6) is formed with a through-hole (38) in the center thereof so that the nut (28) can be operated through the through-hole (38) from outside the apparatus housing (18).

2. The spring balancer apparatus according to claim 1, wherein a housing (9) for a bush (41, 42) for guiding the rod (5) is removably fitted into a through-hole formed in the member (8) which forms a wall of the apparatus housing (18) at said opposite side of the housing (18) from the retaining plate (6).

3. The spring balancer apparatus according to claim 1 or 2, wherein said retaining plate (6) and/or said opposite wall member (8) is formed with a protrusion (23, 29, 30, 31) or groove which engages one end of each of the springs (7a, 7b), to position the spring.

4. The spring balancer apparatus according to any preceding claim, wherein said springs (7a, 7b) with different turn diameters in the housing (18) are coiled in opposite directions.

5. The spring balancer apparatus according to any preceding claim, wherein said springs (7a, 7b) are located between the retaining plate (6) and the wall member (8) of the housing (18) situated remoter from the retaining plate (6) in a manner such that the diametral direction of buckling caused as the springs (7a, 7b) are compressed is the same for each spring.

6. The spring balancer apparatus according to any preceding claim, wherein said housing (18) includes a pipe member (4), a first wall plate (8) located at one end of the pipe member (4) and through which the rod (5) is inserted into the housing (18), and a second wall plate (10) located at the other end of the pipe member (4), the housing (18) being formed by fastening the first and second wall plates (8, 10) by means of tie rods or bolts (35).

7. The spring balancer apparatus according to claim 3, or claim 4, 5 or 6 when appended to claim 3, wherein said retaining plate (6) is formed with a plurality of ring-shaped step portions (29, 30, 31) centering around the rod (5) attached thereto and having diameters reduced in stages toward the inner part of the housing (18), one end of each said spring (7a, 7b) being positioned by means of a corresponding step portion.

8. The spring balancer apparatus according to any preceding claim, when installed between a base and a movable part of a machine or between movable parts of a machine.

## Patentansprüche

1. Federausgleichs-Vorrichtung, die zwischen einer Basis und einem bewegbaren Teil einer Maschine oder zwischen bewegbaren Teilen einer Maschine zu montieren ist, welche Vorrichtung umfasst:
eine Stange (5), deren eines Ende auf der Basis oder dem bewegbaren Teil der Maschine zu montieren ist,
eine Rückhalteplatte (6) innerhalb eines Gehäuses der Vorrichtung, die an dem anderen Ende der Stange (5) angebracht ist, und
zwei oder mehr Federn (7a, 7b) mit verschiedenen Windungsdurchmessern, die ineinander um die Stange (5) und zwischen der Rückhalteplatte (6) und einem Teil (8) angeordnet sind, das eine Wand des Gehäuses (18) bildet, welches Teil (8) sich auf der derjenigen Seite, auf der sich die Rückhalteplatte (6) befindet, entgegengesetzten Seite des Gehäuses (18) befindet,
**dadurch gekennzeichnet, dass**
die Rückhalteplatte (6) abnehmbar an dem Ende der Stange (5) angebracht und in deren Zentrum mit einer Ausnehmung (32) ausgebildet ist, die sich in Richtung auf ein Teil (10) öffnet, das eine Wand des Vorrichtungs-Gehäuses (18) auf derjenigen Seite desselben bildet, die der Rückhalteplatte (6) benachbart ist, wobei ein Ende der Stange (5) in die Ausnehmung (32) vorsteht und ein mit Gewinde versehener Teil (27), der an dem vorstehenden Ende der Stange (5) ausgebildet ist, in Eingriff mit einer Mutter (28) steht, so dass die Rückhalteplatte (6) auf der Stange (5) montiert ist, und ferner
das Teil (10), das die Wand des Vorrichtungs-Gehäuses (18) auf derjenigen Seite desselben bildet, die der Rückhalteplatte (6) benachbart ist, mit einem Durchgangsloch (38) in dem Zentrum desselben ausgebildet ist, so dass die Mutter (28) von außerhalb des Vorrichtungs-Gehäuses (18) durch das Durchgangsloch (38) betätigt werden kann.

2. Federausgleichs-Vorrichtung nach Anspruch 1, wobei ein Gehäuse (9) für eine Buchse (41, 42) zum Führen der Stange (5) in ein Durchgangsloch eingesetzt ist, das in dem Teil (8) ausgebildet ist, das eine Wand des Vorrichtungs-Gehäuses (18) auf der der Rückhalteplatte (6) gegenüberliegenden Seite des Gehäuses (18) bildet.

3. Federausgleichs-Vorrichtung nach Anspruch 1 oder 2, wobei die Rückhalteplatte (6) und/oder das Teil (8) auf der gegenüberliegenden Seite mit einem Vorsprung (23, 29, 30, 31) oder einer Nut ausgebildet ist, der oder die in Eingriff mit einem Ende jeder der Federn (7a, 7b) steht, um die Feder zu positionieren.

4. Federausgleichs-Vorrichtung nach einem der vorhergehenden Ansprüche, wobei die Federn (7a, 7b) mit verschiedenen Windungsdurchmessern in dem Gehäuse (18) in entgegengesetzten Richtungen gewickelt sind.

5. Federausgleichs-Vorrichtung nach einem der vorhergehenden Ansprüche, wobei sich die Federn (7a, 7b) in einer Weise zwischen der Rückhalteplatte (6) und demjenigen Wandteil (8) des Gehäuses (18) befinden, das weiter von der Rückhalteplatte (6) entfernt ist, dass die diametrale Richtung der Ausbeulung, die verursacht wird, wenn die Federn (7a, 7b) zusammengedrückt werden, für jede Feder die gleiche ist.

6. Federausgleichs-Vorrichtung nach einem der vorhergehenden Ansprüche, wobei das Gehäuse (18) ein Rohrteil (4), eine erste Wandplatte (8), die sich an einem Ende des Rohrteils (4) befindet und durch welche die Stange (5) in das Gehäuse (18) eingeführt ist, und eine zweite Wandplatte (10) enthält, die sich an dem anderen Ende des Rohrteils (4) befindet, wobei das Gehäuse (18) durch Befestigen der ersten und zweiten Wandplatten (8, 10) mittels Verbindungsstangen oder Schrauben (35) gebildet ist.

7. Federausgleichs-Vorrichtung nach Anspruch 3 oder nach Anspruch 4, 5 oder 6, wenn diese auf Anspruch 3 rückbezogen sind, wobei die Rückhalteplatte (6) mit einer Vielzahl von ringförmigen Stufenteilen (29, 30, 31) ausgebildet ist, die konzentrisch um die an ihr angebrachte Stange (5) angeordnet sind und Durchmesser haben, die in Stufen in Richtung auf den inneren Teil des Gehäuses (18) verringert sind, wobei ein Ende jeder der Federn (7a, 7b) mittels eines entsprechenden Stufenteils positioniert ist.

8. Federausgleichs-Vorrichtung nach einem der vorhergehenden Ansprüche, wenn diese zwischen einer Basis und einem bewegbaren Teil einer Maschine oder zwischen bewegbaren Teilen einer Maschine montiert ist.

## Revendications

1. Un dispositif d'équilibrage par ressort devant être installé entre un bâti et une partie mobile d'une machine ou entre des parties mobiles d'une machine, ledit dispositif comprenant :
une tige (5) dont une extrémité doit être montée sur le bâti ou la partie mobile de la machine ;
une plaque de retenue (6) à l'intérieur d'un boîtier du dispositif et fixée à l'autre extrémité de la tige (5) ; et
au moins deux ressorts (7a, 7b) à diamètres de spires différents, disposés l'un à l'intérieur de l'autre autour de la tige (5) et entre la plaque de retenue (6) et un élément (8) qui constitue une paroi du boîtier (18), lequel élément (8) se trouve au niveau du côté opposé du boîtier (18) par rapport au côté au niveau duquel est située la plaque de retenue (6) ;
**caractérisé en ce que** ladite plaque de retenue (6) est fixée de manière amovible à l'extrémité de la tige (5) et présente, en son centre, un évidement (32) qui débouche vers un élément (10) qui constitue une paroi du boîtier (18) du dispositif sur son côté adjacent à la plaque de retenue (6), une extrémité de la tige (5) fait saillie dans l'évidement (32), et une partie filetée (27) formée sur l'extrémité en saillie de la tige (5) est en prise avec un écrou (28) de sorte que la plaque de retenue (6) est montée sur la tige (5) et **en ce que**, en outre,
l'élément (10) qui constitue la paroi du boîtier (18) du dispositif sur son côté adjacent à la plaque de retenue (6) présente un trou traversant (38) en son centre de sorte que l'écrou (28) peut être actionné à travers le trou traversant (38) depuis l'extérieur du boîtier (18) du dispositif.

2. Le dispositif d'équilibrage par ressort selon la revendication 1, dans lequel un boîtier (9) pour une douille (41, 42) permettant de guider la tige (5) est montée de manière amovible dans un trou traversant formé dans l'élément (8) qui constitue une paroi du boîtier (18) du dispositif au niveau dudit côté opposé du boîtier (18) par rapport à la plaque de retenue (6).

3. Le dispositif d'équilibrage par ressort selon la revendication 1 ou 2, dans lequel ladite plaque de retenue (6) et/ou ledit élément de paroi opposé (8) présente une saillie (23, 29, 30, 31) ou une gorge qui s'engage avec une extrémité de chacun des ressorts (7a, 7b), afin de mettre en place le ressort.

4. Le dispositif d'équilibrage par ressort selon une quelconque revendication précédente, dans lequel lesdits ressorts (7a, 7b) a diamètres de spires différents se trouvant dans le boîtier (18) sont bobinés dans des directions opposées.

5. Le dispositif d'équilibrage par ressort selon une quelconque revendication précédente, dans lequel lesdits ressort (7a, 7b) sont situés entre la plaque de retenue (6) et l'élément de paroi (8) du boîtier (18) situé le plus éloigné de la plaque de retenue (6) d'une manière telle que la direction diamétrale de la déformation provoquée lorsque les ressorts (7a, 7b) sont comprimés soit la même pour chaque ressort.

6. Le dispositif d'équilibrage par ressort selon une quelconque revendication précédente, dans lequel ledit boîtier (18) comprend un élément de tuyau (4), une première plaque de paroi (8) située à une extrémité de l'élément de tuyau (4) et à travers laquelle la tige (5) est insérée dans le boîtier (18), et une seconde plaque de paroi (10) située à l'autre extrémité de l'élément de tuyau (4), le boîtier (18) étant constitué par fixation des première et seconde plaques de paroi (8, 10) au moyen de tirants ou de boulons (35).

7. Le dispositif d'équilibrage par ressort selon la revendication 3, ou la revendication 4, 5 ou 6 lorsqu'elle dépend de la revendication 3, dans lequel ladite plaque de retenue (6) présente une pluralité de parties annulaires en gradin (29, 30, 31) se centrant autour de la tige (5) fixée à celle-ci et présentant des diamètres qui se réduisent par paliers en direction de la partie interne du boîtier (18), une extrémité de chacun desdits ressorts (7a, 7b) étant mise en place au moyen d'une partie en gradin correspondante.

8. Le dispositif d'équilibrage par ressort selon une quelconque revendication précédente, lorsqu'il est installé entre un bâti et une partie mobile d'une machine ou entre des parties mobiles d'une machine.
